Europäisches Patentamt

European Patent Office

Office européen des brevets

(19)

(11) Publication number: 0 396 012
A2

## (12) EUROPEAN PATENT APPLICATION

(21) Application number: 90107894.9

(22) Date of filing: 25.04.90

(51) Int. Cl.⁵: B65H 67/06, B65G 61/00

(30) Priority: 02.05.89 IT 8339389

(43) Date of publication of application:
07.11.90 Bulletin 90/45

(84) Designated Contracting States:
CH DE ES FR GB IT LI

(71) Applicant: MASCHINENFABRIK RIETER AG
Klosterstrasse 20
CH-8406 Winterthur(CH)

(72) Inventor: Buzziolo, Sandro
Via Bicinicco 41/4
I-33100 Udine(IT)
Inventor: Gerin, Umberto
Via San Giuliano 37
I-33170 Pordenone(IT)
Inventor: Lancerotto, Fabio
Via D. Compagni 2
I-20131 Milano(IT)
Inventor: Meyer, Urs
Hohfurristrasse 1
CH-8172 Niederglatt ZH(CH)

(74) Representative: Petraz, Gilberto Luigi
G.L.P. S.a.S. di Gilberto Petraz P.le Cavedalis
6/2
I-33100 Udine(IT)

(54) Movable device to palletise yarn packages.

(57) Movable device (10) to palletise yarn packages, which is suitable to cooperate with yarn package production/delivery machines (33) to be tended and comprises:
- a movable base (11) suitable to move between a machine (33) to be tended and one or more receiving/loading stations (39-40-41),
- a support (44) for pallets (17) which is located on the movable base (11) and is suitable to bear a pallet (17) in a position such as to enable layers of yarn packages (20) to be superimposed on the pallet (17),
- a store (43) for receiving sheets (16) to be positioned between successive layers of packages (20) on a pallet (17) borne on the support (44), and
- at least one handling device (21-31) suitable to take a yarn package (20) from a production/delivery machine (33) and to position it in a pre-determined position in relation to the support (44) of the pallet (17) - that is to say, in relation to the pallet (17) borne on the support (44) - and to take from the store (43) a sheet (16) and to position that sheet (16) on a layer of yarn packages (20) formed on a pallet (17) borne on the support (44).

fig. 2

Xerox Copy Centre

## MOVABLE DEVICE TO PALLETISE YARN PACKAGES

This invention concerns a movable device to palletise yarn packages. To be more exact the invention concerns a movable device suitable to take yarn packages from their production machines or from machines suitable to deliver yarn packages and to load them in an orderly manner on pallets and able to run along any required path without difficulty within the production shops.

Loading onto pallets takes place at the position of receiving the yarn packages from their production or delivery machine, which may be, for instance, a winding machine, fly frame, open-end spinning machine, take-up frame, two-for-one twisting frame or yet another.

The words "yarn package" are to be understood generically as meaning any type of package of yarn or roving usually wound in cylindrical or conical packages, since the device of the invention can be employed in all applications such as those cited above.

The yarn packages may also consist of yarns of continuous fibres, such as manmade fibres for instance, or yarns of discontinuous fibres, such as the fibres of cotton, wool, etc. for instance.

The state of the art comprises yarn package palletisation devices that service textile machines producing yarn packages and, in particular, automatic winding machines and open-end spinning machines.

Such known devices are generally robots which are constructionally complex and difficult to operate and which move within a yarn package production plant and intervene when required.

Such robotised devices can load the pallets at the place where they take the yarn packages and bear for this purpose the elements required for the completion of a pallet load.

Alternatively they may load the pallets at a central packaging station, to which the yarn packages taken from the machines are brought on suitable conveying means.

Simpler pallettisation devices are also known which are easier to operate and are of a type which can be likened to manipulators.

Such manipulators and also the robotised devices cited above presuppose that the shops of the mill have a lay-out arranged for the employment of such means, or else they require obligatory and unchangeable routes for their movements, and the lay-out of a plurality of yarn package production machines has to comply with such routes.

Such known devices can only be applied with difficulty in existing plants, therefore, owing to their complex structure and to the relative arrangement of the plant. Satisfactory lay-outs can only be obtained in some cases by means of considerable and expensive restructuring works.

The present applicant has the purpose of preparing a very simple device for the palletisation of yarn packages, the device being able to serve a plurality of usage points, even if already existing, without particular problems of plant lay-out.

The invention is set forth in the main claim, while the dependent claims describe various features of the invention.

The movable device of the invention is a movable trolley, which is advantageously guided by a magnetic wire and can move without difficulty among the yarn package production/delivery machines, taking therefrom the completed yarn packages pre-arranged for removal.

It is known that a trolley of a wire-guided type is conducted by a magnetic field generated by a wire sunk in the ground at a small depth and traversed by an electrical current of weak intensity.

Other wires enable instructions to be given to the trolley by means of a suitable combination of frequencies.

The employment of this type of actuation of the movable trolley makes possible a very speedy and easy installation of the guide routes, particularly so in existing plants, and also great flexibility when changes of lay-out are involved.

This type of actuation enables also the device to be constructed very simply, with resulting savings in the cost of the device.

The movable device according to the invention comprises means suitable to take the completed yarn packages from their production/delivery machines, and these means are also able to convey and place the yarn packages in an orderly manner on a pallet.

The loading of the pallet is carried out by placing thereon a plurality of superimposed layers of yarn packages, the layers being separated from each other by suitable means, which are normally cardboard sheets.

The movable device according to the invention carries advantageously a stock of cardboard sheets and includes means able to engage the sheets one at a time and to place them between one layer of yarn packages and the next layer.

The movable palletisation device comprises also means to move the pallet vertically so that it can be completely loaded, the yarn packages being always deposited on the same reference plane.

According to a variant the pallet is stationary in relation to the movable device and the yarn packages are loaded in progressively higher layers.

The means provided to engage and place the yarn packages can work equally well on at least two sides of the trolley and can thus cooperate, without changing the position of the trolley, with two production/delivery machines positioned in series.

The movable device of the invention can complete the loading of a pallet with yan packages coming from one production/delivery machine or from a plurality of production/delivery machines. This may occur when the movable trolley is moved from one position to another to take yarn packages.

When a pallet has been fully loaded, the movable device is conducted to a service station, where the loaded pallet is discharged and a new pallet is loaded onto the trolley.

Stocks of cardboard sheets may also be available in this service area and be ready for loading onto the movable device when required; other auxiliary services may also be provided for the movable palletisation device, such as the charging of batteries of the wire-guided trolley, for instance.

The movable device of the invention may follow pre-set routes or logics or may go to production machines which require its presence. It may also be operated by an organizer means which controls its destination, particularly where there is a multiplicity of stations to be serviced by a plurality of movable devices.

These and other special features will be made clearer in the description that follows.

The attached figures, which are given as a non-restrictive example, show the following:-

Fig.1 is a diagrammatic front view of a movable palletisation device according to the invention;

Fig.2 is a side view of the movable device of Fig. 1;

Fig.3 is a plan view of the movable device of Fig.1;

Fig.4 is a diagrammatic front view of the movable device of Fig .1 cooperating with yarn packages production machines;

Fig.5 is a plan view of Fig. 4;

Fig.6 is an embodiment of a possible lay-out employing the movable palletisation device of the invention.

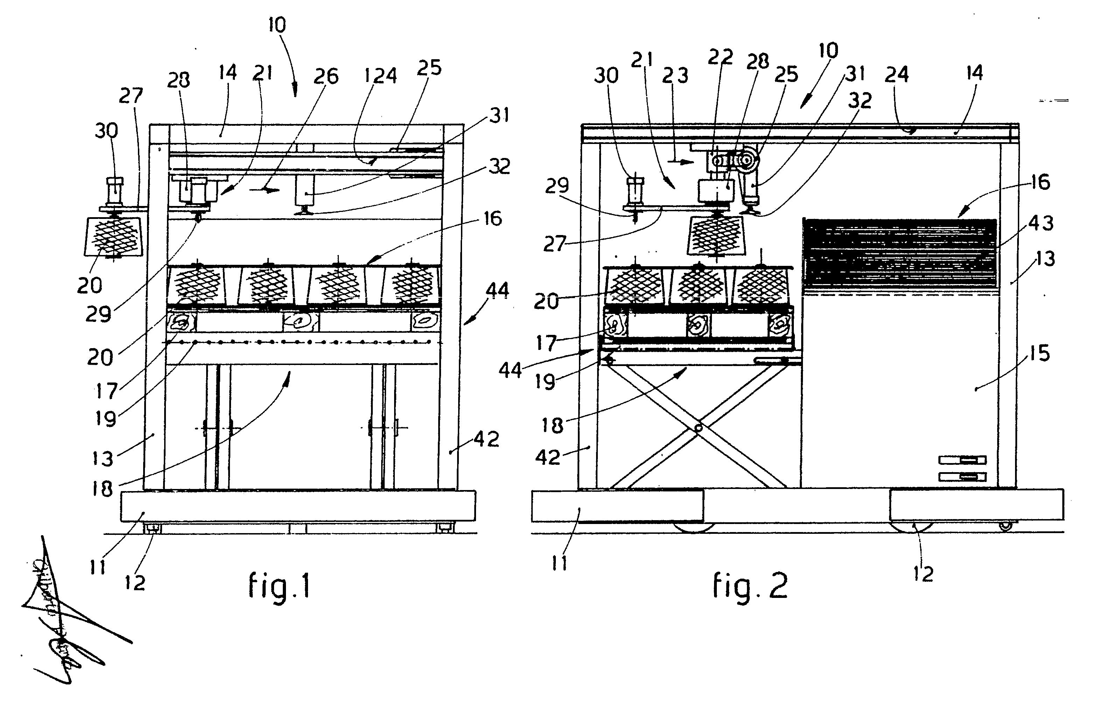

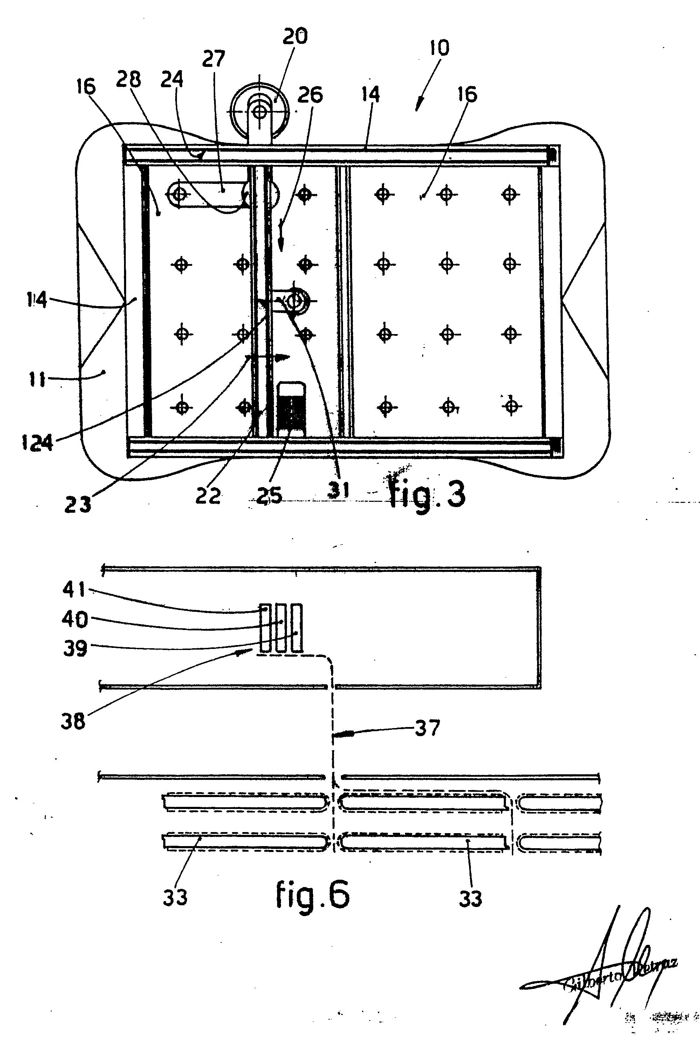

In Figs.1 to 3 a movable palletisation device 10 comprises an open structure consisting of a movable base 11, which is substantially a wire-guided trolley able to move on wheels 12, and of a plurality of uprights 13 and cross members 14 arranged peripherally to the movable base 11. The uprights 13 and cross members 14 form a frame 42 fitted to the movable base 11, which supports and positions the various equipments.

The base 11 and a control case 15 contain all the units needed to operate and control the device 10, such as steering and drive motors, control units, batteries, etc.

A store 43 of cardboard sheets 16 is located above the control case 15 and contains enough sheets 16 to load a plurality of pallets 17.

A pallet 17 is positioned on an elevator 18 which is suitably actuated by a control located advantageously within the control case 15 .

The surface to support the pallet 17 on the elevator 18 consists of a plurality of rollers 19 to enable the pallet 17, when loaded or partly loaded, to be readily moved sideways. The rollers 19 may be idler rollers or be powered. In this case the elevator 18 and roller surface 19 form a support 44 for the pallet 17.

The placing of layers of yarn packages 20 on the pallet 17 takes place starting from the highest position of the elevator 18, which is then lowered in steps, layer by layer, by an amount equal to the height of a yarn package 20, a cardboard sheet 16 being interposed between the layers.

A yarn package handling unit 21 operates in the upper part of the palletisation device 10 and is able to engage yarn packages 20 discharged from the production machines and to place them in an orderly manner on the pallet 17.

The yarn package handling unit 21 can move on a horizontal plane and can carry out movements according to cartesian coordinates "x and "y". For this purpose it is connected to a movable shaft 22 which can run in the direction of the arrow 23 on guides 24 included in the cross members 14.

The movable shaft 22 can be driven by its own motor 25.

The yarn package handling unit 21, when suitably actuated, can run instead in the direction of the arrow 26 on guides 124 provided on the movable shaft 22.

The yarn package handling unit 21 can also move according to polar coordinates.

The yarn package handling unit 21 is provided with a crank element 27 able to be rotated by 90° about its axis by an actuator 28.

The crank element 27 bears at each of its ends a gripper 29 suitably actuated by an actuator 30.

The grippers 29 are suitable to cooperate with the yarn packages 20 and to take them from their production machines and position them in an ordered manner on the cardboard sheets 16.

The grippers 29 can engage and handle one or more yarn packages at the same time.

The conformation and type of actuation of the crank element 27 may, if so required, enable operations to be carried out on two or more yarn packages 20 at one and the same time, for instance when one yarn package 20 is being taken from its production machine and the yarn package 20 taken earlier is being positioned on the cardboard sheet 16, the crank element 27 having been suitably rotated after its previous engagement of the previous yarn package.

A unit 31 to engage cardboard sheets 16, which is suitable to engage one single sheet 16 and to place it on each layer of yarn packages 20 deposited on the pallet 17, is solidly fixed to the movable shaft 22. This unit 31, which makes use of movements of the movable shaft 22, includes advantageously an aspiration element 32 to engage and convey the cardboard sheets 16.

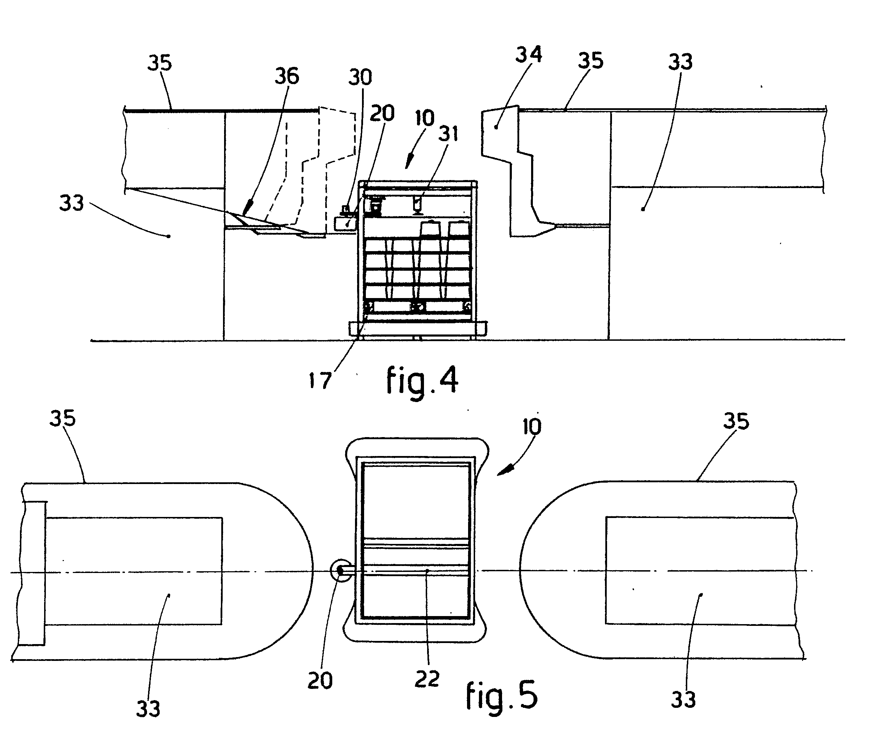

Figs.4 and 5 show diagrams of the palletisation device 10 operating between two production machines, which in this case are open-end spinning machines 33 arranged in series.

Instead of the open-end spinning machines 33 other machines to produce or deliver 33 yarn packages 20 may be included.

Fig.4 includes a carriage 34 that pieces up the yarn and slides on guides 35 along the spinning machine 33.

Fig.4 shows also a retractable chute 36 positioned at the end of the spinning machine 33 and able to convey completed yarn packages 20 to a position suitable for cooperation with the grippers 29 of the the crank element 27.

The structure of the palletisation device 10 is such as to enable it to cooperate with the chutes 36 of two machines 33 while it remains in one position.

The palletisation device 10 may be equipped with a bar coder which links to each fully loaded pallet 17 the code of the machine 33 which produced or delivered the yarn packages 20 for such loading.

Lastly, Fig.6 is a diagram of a possible path 37 envisaged for a movable palletisation device 10 which services a plurality of machines 33 positioned in series in a plurality of rows.

The movable device 10 cooperates with a service area 38 containing stations intended, for instance, for the discharge of full pallets 39, for the loading of empty pallets 40, for the loading of cardboard sheets and for the re-charging of batteries 41 and/or for other auxiliary functions.

The invention is not restricted to the details of the embodiment described with reference to Figs.1 to 5. We detail below some possible modifications within the scope of the invention.

A first variant concerns the movable base and guide system. A movable device 10 according to the invention comprises a frame as a support on the movable base 11. The movable base 11 has to be able to move between a machine 33 to be tended and one or more service stations, such as the stations referenced with 39, 40 and 41 (Fig. 6).

The service station or stations 39-40-41 have to be able to load the movable device 10 with empty pallets 17 and also with cardboard sheets 16 to be placed between successive layers of yarn packages 20 superimposed on a pallet 17 borne on the movable device 10.

The station or stations 39-40-41 also have to be able to receive a loaded pallet 17 from the movable device 10.

If the supply of electrical energy to the device 10 is provided by a battery, then the service station or stations 39-40-41 should be able to recharge or replace the battery of the device 10 at intervals suitable for the independent working of the movable device 10.

Instead of the replacement or recharging of the battery, arrangements may be provided for topping up the tank or container of fuel or fluid under pressure when the motor uses such fuel or fluid under pressure. All this, however, is not essential.

The supply of electrical energy to the device 10 may be provided by cable from a stationary source, the cable being drawn behind the device. In this case the movable device 10 is preferably adapted to move along guide rails, which may be used to supply the electrical energy by means of a sliding wiper contact located on the device 10.

When a system of rails is employed, then devices able to move on the ground are preferable but not essential. The movable device 10 may be suitable to move also on overhead rails.

When the movable device 10 is not provided with rails and can move on the ground, it is not necessary to use inductive guide means.

Optical systems are available which enable a movable device 10 equipped with an appropriate sensor to follow a pre-determined path, for instance a line marked on the floor with a marking means and providing a contrast with the background colour of the floor (or at least that portion of the floor near the path).

The movable device 10 can be arranged to tend machines 33 individually or in pairs as shown in Fig.6. Tending in pairs is dependent upon appropriate machine lay-outs and is not an essential feature of the device itself.

A further variant provides a support 44 for the pallet 17. The pallet support 44 has to hold the pallet to be located securely in a position in which layers of packages 20 can be built up, namely substantially horizontally in a coordinated manner. The support 44 may be adapted to move the pallet 17 in relation to the handling unit 21 or may be stationary relative to the frame 42. In the latter case the handling unit 21 has to be adapted to perform all the movements (relative to the frame 42) necessary both to build a layer of packages 20 and to repeat the layer building procedure in the upper layers so as to form the complete stack of packages 20 according to a pre-determined pattern.

It is also possible to provide for a variant of the store 43 of the sheets 16. The sheets required to be located between successive layers of packages 20 (in accordance with the desired pattern for the complete stack of packages - see for example the Article "Vorschlage und Anregungen zur Auto-matisierung des Kreuzspulentransportes in Spin-nereien" in Melliand Textilberichte No.4 of 1985, pages 252 to 258) have to be carried and positioned by the sheet engagement unit 31. As shown in Fig. 2, these sheets can be disposed horizontally next to the pallet support. However, they could also be disposed vertically when in the store, in which case the complete engagement unit 31 has to include means to change a sheet 16 from the vertical to the horizontal disposition as it 16 is transferred from the store 43 to the stack of packages 20 being built on the pallet.

The sheets 16 may be made of any desired or appropriate material and may have any desired or appropriate configuration. Where the movable device 10 has its own power supply (battery), the sheet store 43 can be provided on top of the power supply/motor unit. Alternatively, the sheet store 43 could be located above the pallet support 44 (and above the space in which a stack of packages is built on a pallet). A sheet 16 can then be lowered from the store 43 directly into position on top of a layer of packages built below the store 43. This necessitates an increase in the working height of the movable device 10 (so as to hold the store) and also the capability to make free the vertical path of movement of the sheet from the store 43 onto the stack below it.

A further variant may concern the handling system 21-31. The handling system 21-31 has to be able to handle both packages and sheets. For this purpose the handling system 21-31 may comprise a single handling unit adapted to handle both packages 20 and sheets 16, or a pair of handling units, of which one is adapted to handle packages 20 while the other handles sheets 16.

The package handling unit 21 (whether or not this unit is also adapted to handle sheets) has to be able to grip a package at a delivery position on a machine 33 to be tended and to move that package to a pre-determined position within the stack of packages being formed on a pallet 17 carried by the pallet support. Where the pallet support enables vertical movement of the stack to be carried out (as shown in Figs.1 and 2), the package handling unit 21 has only to perform movements enabling positioning of packages 20 to be carried out in a pre-determined array within a layer of the stack. Where the pallet support 44 is stationary relative to the frame 42, the package handling unit 21 has also to be able to perform vertical movements so as to build successive layers of the stack one on top of the other.

The arrangement of packages 20 within an individual layer can be determined in accordance with subsequent handling requirements and is not an essential feature of the invention. The control for the package handling unit 21 can be appropriately programmed to give any desired array. The "linear matrix" shown in Figs .2 and 3 is, however, most common.

The movement of the package handling unit 21 on the basis of a set of cartesian coordinates is not essential. The system could, for example, be based on a set of polar coordinates in which the radius of a handling arm and the angular disposition of that arm relative to its support is controllably adjustable. Essentially the package handling unit 21 has to be controllably movable at least between the delivery position of a machine to be tended and any one of the plurality of positions within a layer of packages at which a gripped package 20 has to be located.

The package handling unit 21 should also be adjustable to enable gripped conical packages 20 to be laid (one after another or first one upright layer and thereafter an overturned layer so that the taper of one layer is upwards whereas the taper of the next layer mating with the previous layer is downwards) in opposite dispositions within the layer, giving a more compact arrangement of cones within the layer of which the surface is thus filled.

The sheet engagement unit 31 (whether or not this unit is also adapted to handle packages) has to be adapted to separate a sheet 16 from the store 43 and move it to a desired position in the stack.

It is also possible to provide variants of the receiving and loading stations. The movable device 10 and the station or stations 39-40-41 have to be adapted relative to each other so as to enable the desired operations to be performed. Devices designed to perform operations requiring considerable force, for instance removing a loaded pallet, are preferably provided at the stations 39-40-41 rather than on the movable device 10. The movable device 10 has to be adapted to make possible access for the operating devices of the station to the parts carried by the movable device 10.

The drive system for the vehicle could alternatively comprise a chain element or toothed belt fixed in place between two end stations and cooperating with a drivable toothed wheel on the vehicle.

The drive system should where possible be made reversible so that the vehicle can selectively be driven in opposite directions.

The lifting means for the pallet support could comprise, for example:
- one or more vertical worm gears (with suitable additional vertical guides), the or each such gear being rotatable about its longitudinal axis, and a suitable coupling between the worm gear and the pallet support, or

- a plurality of lifting chaos (or alternative flexible elements) extending from a drive drum over suitable stanchions, or
- a fork-lift sub-assembly, the fork-lift device being vertically movable relative to the base or chassis of the vehicle.

In the latter case, the fork of the fork-lift device can extend from one side into the space in which the pallet is to be located in use.

The pallet support may then also comprise a conveyor means (for example a roller conveyor) onto which the loaded pallet can be lowered by the fork-lift device.

The vertical stroke of the movable pallet support is preferably sufficient to enable a stack of 10 to 15 layers to be built up.

The stack height together with the pallet area preferably enables building of a stack of 150 to 250 yarn packages.

The package gripping assembly may include a plurality of gripping devices to enable gripping and manipulation of a corresponding plurality of packages simultaneously.

## Claims

1 - Movable device (10) to palletise yarn packages, which is suitable to cooperate with yarn package production/delivery machines (33) to be tended and is characterized in that it comprises:
- a movable base (11) suitable to move between a machine (33) to be tended and one or more receiving/loading stations (39-40-41),
- a support (44) for pallets (17) which is located on the movable base (11) and is suitable to bear a pallet (17) in a position such as to enable layers of yarn packages (20) to be superimposed on the pallet (17),
- a store (43) for receiving sheets (16) to be positioned between successive layers of packages (20) on a pallet (17) borne on the support (44), and
- at least one handling device (21-31) suitable to take a yarn package (20) from a production/delivery machine (33) and to position it in a pre-determined position in relation to the support (44) of the pallet (17) - that is to say, in relation to the pallet (17) borne on the support (44) - and to take from the store (43) a sheet (16) and to position that sheet (16) on a layer of yarn packages (20) formed on a pallet (17) borne on the support (44).

2 - Device (10) as claimed in Claim 1, which comprises a yarn package handling unit (21) that cooperates with discharges (36) of the machines (33) to be tended and with the pallet (17) being loaded.

3 - Device (10) as claimed in Claim 1 or 2, which comprises a unit (31) that takes sheets (16) from the store (43) of the sheets.

4 - Device (10) as claimed in any of Claims 1 to 3 inclusive, in which the pallet support (44) is stationary in relation to the movable base (11).

5 - Device (10) as claimed in any of Claims 1 to 3 inclusive, in which the pallet support (44) is able to move in relation to the movable base (11) and cooperates with an elevator (18).

6 - Device (10) as claimed in any claim hereinbefore, in which the package handling unit (21) consists of a crank element (27) bearing grippers (29) at its two ends.

7 - Device (10) as claimed in any claim hereinbefore, in which the crank element (27) can rotate by at least 90° about its own axis.

8 - Device (10) as claimed in any claim hereinbefore, in which a control box (15) forms a support for the store (43) of the sheets (16).

9 - Device (10) as claimed in any claim hereinbefore, which cooperates with a station (39) for discharge of full pallets.

10 - Device (10) as claimed in any claim hereinbefore, which cooperates with a station (40) for discharging empty pallets.

11 - Device (10) as claimed in any claim hereinbefore, which cooperates with a station (41) for loading sheets (16).

12 - Device (10) as claimed in any claim hereinbefore, which is governed by an organizer device that controls functions and destinations.

13 - Device (10) as claimed in any claim hereinbefore, which is equipped with a bar coder.

14 - Device (10) as claimed in any claim hereinbefore, in which conical overturned yarn packages (20) are inserted into the empty spaces in a layer of conical yarn packages (20)

fig. 2

fig. 1

fig.3

fig.6

fig.4

fig.5

EP 0 396 012 A2